# EUROPÄISCHE PATENTSCHRIFT

(11) **EP 3 888 159 B1**
(45) Veröffentlichungstag und Bekanntmachung des Hinweises auf die Patenterteilung: **22.06.2022**
(21) Anmeldenummer: 20705899.1
(22) Anmeldetag: 11.02.2020
(51) Int. Cl.: H01M 50/20

(54) **GEHÄUSE MIT ZUMINDEST EINEM ERSTEN UND EINEM ZWEITEN GEHÄUSETEIL**
HOUSING HAVING AT LEAST ONE FIRST AND ONE SECOND HOUSING PART
BOÎTIER COMPORTANT UNE PREMIÈRE ET UNE SECONDE PARTIE DE BOÎTIER

(30) Priorität: 11.02.2019 DE 102019103295
(43) Veröffentlichungstag der Anmeldung: 06.10.2021
(73) Patentinhaber: FAZUA GmbH, 85521 Ottobrunn (DE)
(72) Erfinder: BIECHELE, Johannes, 85521 Ottobrunn (DE)
(74) Vertreter: Patentanwälte Bauer Vorberg Kayser
(86) Internationale Anmeldenummer: PCT/EP2020/053477
(87) Internationale Veröffentlichungsnummer: WO 2020/165173

(56) Entgegenhaltungen:
- WO-A2-2013/045530
- DE-A1-102012 000 996
- DE-A1-102014 217 523
- DE-B3-102016 225 663
- DE-U1-202016 006 515
- US-A1- 2010 307 848

## Beschreibung

Die vorliegende Erfindung betrifft ein Gehäuse, insbesondere ein Batteriegehäuse, umfassend zumindest einen ersten Gehäuseteil, zumindest einen zweiten Gehäuseteil und zumindest ein den ersten Gehäuseteil mit dem zweiten Gehäuseteil verbindendes Verbindungselement, wobei der erste Gehäuseteil und der zweite Gehäuseteil derart eingerichtet sind, dass sie in einem miteinander verbundenen Zustand einen Gehäuseinnenraum von einer auf der anderen Seite des ersten Gehäuseteils und des zweiten Gehäuseteils liegenden Umgebung trennen.

Aus dem Stand der Technik ist eine Vielzahl an Gehäusen bekannt, die aus mehreren Gehäuseteilen zusammengesetzt sind, wobei die Gehäuseteile auf unterschiedliche Arten miteinander verbunden werden können. So können der Gehäuseinnenraum und die darin angeordneten Bauteile vor der Umgebung und äußeren Einflüssen wie beispielsweise Nässe oder Staub dadurch geschützt werden, dass der Gehäuseinnenraum durch die Gehäuseteile eingeschlossen bzw. eingekapselt wird. Ein sicherer Schutz ist insbesondere bei Gehäusen für elektrische Bauteile, beispielsweise für eine Batterie bzw. einen Akkumulator zum Beispiel eines Elektrofahrrads, notwendig.

Dabei kann der Gehäuseinnenraum geschützt werden, indem beispielsweise die Gehäuseteile an ihren aufeinanderstoßenden Kontaktflächen zusammengeklebt und miteinander verschweißt werden. So entsteht eine dauerhafte Verbindung. Nachteilig ist jedoch, dass diese Verbindung nicht einfach wieder lösbar und somit das Gehäuse nicht auf einfache Weise wieder demontiert und mehrfach montiert werden kann. Ein Austausch oder eine Kontrolle von im Gehäuseinnenraum angeordneten Bauteile ist nicht auf einfache Weise realisierbar. Ferner ist der Montageprozess zum Verschluss des Gehäuses, sprich der Vorgang des Verbindens der Gehäuseteile miteinander, sehr aufwendig.

Als eine alternative Methode zum Verbinden von Gehäuseteilen sind aus dem Stand der Technik Schraubverbindungen bekannt. Problematisch ist hierbei jedoch, dass die Verbindungsstellen zwischen den Gehäuseteilen nicht gleichmäßig belastet und nicht gleichmäßig zusammengedrückt werden. Damit herrschen unterschiedlich starke Verbindungskräfte an unterschiedlichen Stellen entlang der Kontaktflächen zwischen den Gehäuseteilen. Es kommt also zu einer punktuellen Komprimierung im Bereich der Verbindungselemente, also im Bereich der Schrauben. Dies ist zum einen dahingehend nachteilig, dass eine eventuell vorgesehene Dichtung nicht gleichmäßig komprimiert wird. Zum anderen ist nachteilig, dass sehr steife Gehäusematerialien vorgesehen werden müssen, damit auch die weniger komprimierten Abschnitte zwischen zwei stark komprimierten Verbindungsstellen sicher verschlossen sind. Ferner ist der Montageprozess dahingehend aufwendig, dass Werkzeuge zum Einsatz kommen müssen. Schließlich müssen in der Regel auch Schraubdome für die Schrauben vorgesehen werden, die dahingehend nachteilig sind, dass das Gehäuse dadurch viel Platz beansprucht und keine bzw. nur unter erhöhten Materialeinsatz eine gleichmäßige Außenoberfläche des Gehäuses erzielt werden kann. Dies führt in nachteiliger Weise auch zu einem höheren Gewicht des Gehäuses.

Eine weitere Alternative stellt die Verwendung von Rastklips, also formschlüssigen Klips zum Verrasten von Gehäuseteilen, als Verbindungselemente dar. Nachteilig hieran ist jedoch, dass sich solche Verbindungselemente zu einfach wieder lösen können. Bei Stößen von außen gegen das Gehäuse oder bei einem Hinfallen des Gehäuses besteht demnach die Gefahr, dass sich die Rastklips lösen und somit die Gehäuseteilen nicht mehr sicher miteinander verbunden sind.

DE 10 2016 225663 B3 betrifft ein Batteriegehäuse aus Gehäuseteilen, bei welchem Batteriegehäuse Befestigungselemente zum kraftschlüssigen Verbinden der Gehäuseteile vorgesehen sind.

US 2010/307848 A1 betrifft ein Gehäuse mit Gehäuseteilen, bei welchem Clips zum Verbinden der Gehäuseteile vorgesehen sind.

DE 20 2016 006515 U1, DE 10 2014 217523 A1, DE 10 2012 000996 A1, sowie WO 2013/045530 A2 betreffen weiteren allgemeinen Stand der Technik an Gehäusen.

Aufgabe der Erfindung ist es daher, ein Gehäuse bereitzustellen, das auf einfache Weise montierbar und demontierbar ist und gleichzeitig einen sicheren und dauerhaften Schutz des Gehäuseinnenraums gegenüber der Umgebung gewährleistet.

Insbesondere sollte der Aufwand für einen Montageprozess so gering wie möglich sein und gleichzeitig eine kompakte Lösung bei geringem Materialaufwand und mit geringem Gewicht bereitgestellt werden.

Erfindungsgemäß wird diese Aufgabe durch eine Vorrichtung gemäß dem unabhängigen Anspruch 1 gelöst. Vorteilhafte Ausgestaltungen und Varianten der Erfindung ergeben sich aus den abhängigen Ansprüchen und der nachfolgenden Beschreibung. So können die in den Ansprüchen einzeln aufgeführten Merkmale in beliebiger, technisch sinnvoller Weise miteinander als auch mit den in der nachfolgenden Beschreibung näher erläuterten Merkmalen kombiniert werden und andere vorteilhafte Ausführungsvarianten der Erfindung darstellen.

Das erfindungsgemäße Gehäuse umfasst zumindest einen ersten Gehäuseteil, zumindest einen zweiten Gehäuseteil und zumindest ein den ersten Gehäuseteil mit dem zweiten Gehäuseteil verbindendes Verbindungselement. Dabei sind der erste Gehäuseteil und der zweite Gehäuseteil derart eingerichtet, dass sie in einem miteinander verbundenen Zustand einen Gehäuseinnenraum von einer auf der anderen Seite des ersten Gehäuseteils und des zweiten Gehäuseteils liegenden Umgebung trennen. Das Gehäuse ist dadurch gekennzeichnet, dass das zumindest eine Verbindungselement als eine mit dem ersten Gehäuseteil und mit dem zweiten Gehäuseteil in Eingriff stehende Profilschiene ausgebildet ist.

Das erfindungsgemäße Gehäuse lässt sich dadurch auf einfache Weise zusammenbauen und ist darüber hinaus bei Bedarf auch wieder demontierbar und schützt gleichzeitig im Gehäuseinnenraum angeordnete Bauteile auf sichere Weise. Durch die Profilschiene wird ein einheitliches Verbindungselement bereitgestellt, das für einen gleichmäßigen Formschluss zwischen den zu verbindenden Gehäuseteilen sorgt. Die Profilschiene sorgt dabei entlang ihrer gesamten Erstreckung für einheitliche Eigenschaften in der Verbindungsstelle, also insbesondere für gleichmäßige Verbindungskräfte, zwischen dem ersten Gehäuseteil und dem zweiten Gehäuseteil.

Im Vergleich zu an vereinzelten Verbindungsstellen vorgesehen Verbindungsmitteln, wie etwa Schrauben, entstehen an den Kontaktflächen zwischen den Gehäuseteilen also keine Stellen unterschiedlich starker Komprimierung, sprich es herrscht keine lediglich punktuelle Komprimierung. So können auch weniger steife Gehäusematerialien verwendet werden, da die weniger komprimierten Dichtstrecken zwischen den Schraubpunkten entfallen. Außerdem entfällt die Notwendigkeit, Schraubdome vorzusehen, wodurch kompaktere und hinsichtlich des Gewichts leichtere Gehäuse erreicht werden. Ferner entfällt die Notwendigkeit, Werkzeuge während des Montageprozesses einzusetzen, da die Profilschiene auf einfache Weise, auch händisch, in die vorgesehenen Ausnehmungen eingeschoben werden kann.

Im Vergleich zu anderen formschlüssigen Verbindungsmitteln wie etwa Rastklips, die die zu verbindenden Gehäuseteile miteinander verrasten, wird ein gegen ein erneutes Lösen der Verbindungsmittel sichereres Gehäuse bereitgestellt. Die längliche Erstreckung der Profilschiene, welche mit den Gehäuseteilen über vorgesehene Ausnehmungen in Eingriff steht, sorgt dafür, dass selbst bei Stößen gegen das Gehäuse oder einem Hinfallen des Gehäuses im Vergleich zu Rastklips eine erheblich geringere Gefahr besteht, dass sich das Verbindungselement aus seiner Ausnehmung wieder herausbewegt.

Bei Bedarf kann durch das Vorsehen von Profilschienen als Verbindungselemente vorliegend auch eine dauerhafte und nicht erneut zerstörungsfreie Verbindung zwischen den Gehäuseteilen erreicht werden. Dazu können die in Eingriff stehenden Profilschienen versiegelt werden, sodass ihr Formschluss mit den beiden Gehäuseteilen nicht zerstörungsfrei lösbar ist. Beispielsweise kann nach einem in Eingriff Bringen der Profilschienen mit an den Gehäuseteilen vorgesehenen Ausnehmungen bzw. mit dem bestimmungsgemäßen Aufnahmeraum zur formschlüssigen Aufnahme der Profilschienen dieser Formschluss nicht erneut zerstörungsfrei lösbar ausgestaltet sein, indem nach dem Einschieben der Profilschienen in die Ausnehmungen bzw. in den bestimmungsgemäßen Aufnahmeraum diese Ausnehmungen bzw. dieser Aufnahmeraum durch blockierende Elemente verschlossen, beispielsweise verklebt, werden bzw. wird. Es ist auch denkbar, dass die Profilschienen zum Verbinden der Gehäuseteile in in den Gehäuseteilen vorgesehene Ausnehmungen bzw. in den bestimmungsgemäßen Aufnahmeraum eingeschoben werden, wobei dieses Einschieben gar nicht bzw. nur auf schwierige Weise wieder rückgängig gemacht werden kann. Dies kann etwa dadurch erreicht werden, dass die Profilschienen zunächst gegen einen Widerstand über ein in den Ausnehmungen bzw. in dem Aufnahmeraum vorgesehenes Blockadeelement geschoben werden müssen. Einmal ganz in die Ausnehmungen bzw. in den Aufnahmeraum in ihre bestimmungsgemäße Position versetzt können die Profilschienen dann gar nicht mehr zerstörungsfrei bzw. nur sehr schwer in die entgegengesetzte Richtung gegen den durch das Blockadeelement hervorgerufenen Widerstand herausgezogen werden.

Generell können die Gehäuse auch derart ausgebildet sein, dass die als Verbindungselemente für die Gehäuseteile vorgesehenen Profilschienen mit anderen üblichen, aus dem Stand der Technik bekannten Verbindungselemente, wie etwa Schrauben oder Rastklips, kombiniert werden.

Das Gehäuse kann zum Beispiel als Batteriegehäuse eingesetzt werden, unter anderem für ein Fahrrad, insbesondere für ein Elektrofahrrad, indem der Akkumulator zur Unterstützung des Antriebs des Elektrofahrrads in dem Gehäuse eingesetzt und somit sicher vor äußeren Witterungseinflüssen geschützt wird. Das Gehäuse kann dann mit weiteren Montagemitteln an einem Rahmen des Elektrofahrrads montiert werden. Darüber hinaus kann das Gehäuse auch allgemein als Maschinengehäuse eingesetzt werden und im Gehäuseinnenraum angeordnete Bauteile vor äußeren Einflüssen schützen.

Gemäß einer ersten vorteilhaften Ausführungsform der Erfindung kann zwischen dem ersten Gehäuseteil und dem zweiten Gehäuseteil auf der dem Gehäuseinnenraum zugewandten Seite der Profilschiene gelegen zumindest eine Dichtung angeordnet sein. Der Gehäuseinnenraum wird somit auf sicherer Weise vor äußeren Einflüssen aus der Umgebung geschützt. Dabei kann die Dichtung zwischen den beiden aufeinanderstoßenden Kontaktflächen der zu verbindenden Gehäuseteile angeordnet sein. Die Dichtung kann den Gehäuseinnenraum vollständig umlaufend ausgebildet sein oder auch nur an Teilabschnitten, beispielsweise an einzelnen Gehäuseseitenwänden, vorgesehen sein.

Erfindungsgemäß ist der erste Gehäuseteil und der zweite Gehäuseteil derart eingerichtet, dass sie im miteinander verbundenen Zustand aufeinanderstoßen und eine erste Kontaktfläche sowie eine zweite Kontaktfläche ausbilden. Ferner weist wenigstens der erste Gehäuseteil im Bereich der ersten Kontaktfläche einen ersten Hakenabschnitt auf. Dabei weist die Profilschiene einen ersten klauenförmigen Abschnitt auf, der den ersten Hakenabschnitt im miteinander verbundenen Zustand des ersten Gehäuseteils mit dem zweiten Gehäuseteil hintergreift.

Weiter vorzugsweise kann der zweite Gehäuseteil in dem Bereich der zweiten Kontaktfläche einen zweiten Hakenabschnitt aufweisen, wobei die Profilschiene einen zweiten klauenförmigen Abschnitt aufweisen kann, der den zweiten Hakenabschnitt im miteinander verbundenen Zustand des ersten Gehäuseteils mit dem zweiten Gehäuseteil hintergreift.

Durch die Ausbildung von klauenförmigen Abschnitten an der Profilschiene, die die Hakenabschnitte der Gehäuseteile hintergreifen, wird eine konstruktiv besonders einfache Ausführungsform des Gehäuses bereitgestellt. Das Gehäuse kann auf einfache Weise montiert und demontiert werden. Ein erneutes Lösen des Verbindungselementes wird durch das Hintergreifen der klauenförmigen Abschnitte hinter die Hakenabschnitte der Gehäuseteile effektiv verhindert.

Erfindungsgemäß stehen der erste Gehäuseteil, der zweite Gehäuseteil und die Profilschiene im miteinander verbundenen Zustand derart miteinander in Eingriff, dass der erste klauenförmige Abschnitt der Profilschiene und eine auf der dem Gehäuseinnenraum zugewandten Seite des ersten Hakenabschnitts angeordnete, erste Nut des ersten Gehäuseteils eine Übermaßpassung ausbilden.

Weiter vorzugsweise können der erste Gehäuseteil, der zweite Gehäuseteil und die Profilschiene im miteinander verbundenen Zustand ferner derart miteinander in Eingriff stehen, dass der zweite klauenförmige Abschnitt der Profilschiene und eine auf der dem Gehäuseinnenraum zugewandten Seite des zweiten Hakenabschnitts angeordnete, zweite Nut des zweiten Gehäuseteils eine Übermaßpassung ausbilden.

Durch die Ausbildung von Übermaßpassungen wird sichergestellt, dass in der Verbindungsstelle zwischen den Gehäuseteilen eine gleichmäßige Pressung hervorgerufen wird, das heißt die Kontaktstellen bzw. Kontaktflächen werden gleichmäßig zusammengedrückt und eine eventuell vorgesehen Dichtung wird gleichmäßig komprimiert. Es wird eine sichere und gleichmäßige Abdichtung des Gehäuseinnenraums gegenüber der Umgebung erzielt. Die Übermaßpassung zwischen Profilschiene und Gehäuseteilen sorgt ferner dafür, dass toleranzbedingte Maßabweichungen kompensiert werden und dennoch eine sichere Verbindung zwischen den Gehäuseteilen gewährleistet wird. Die Kontaktflächen der Gehäuseteile stoßen stets aufeinander und es ist eine definierte Komprimierung der Dichtung gewährleistet.

Nach einer weiteren Ausführungsform kann zur Ausbildung der Übermaßpassung zwischen dem ersten klauenförmigen Abschnitt und der ersten Nut wenigstens ein von dem Grund der ersten Nut hervorstehendes Übermaßelement, insbesondere wenigstens eine Rippe oder Noppe, vorgesehen sein.

Weiter vorzugsweise kann zur Ausbildung der Übermaßpassung zwischen dem zweiten klauenförmigen Abschnitt und der zweiten Nut wenigstens ein von dem Grund der zweiten Nut hervorstehendes Übermaßelement, insbesondere wenigstens eine Rippe oder Noppe, vorgesehen sein.

Alternativ können die Übermaßelemente auch anstatt in Form von Rippen oder Noppen in Form anderer sich vom Grund der Nuten aus erstreckenden Geometrien ausgebildet sein. Die Rippen bzw. allgemein die Übermaßelemente sorgen für eine Verkleinerung des bereitgestellten Aufnahmeraumes für die Profilschiene bzw. ihre klauenförmigen Abschnitte. Der Aufnahmeraum wird dadurch verkleinert, dass die Rippen bzw. Übermaßelemente überschüssiges Material in den Nuten bereitstellen. Dadurch wird eine Übermaßpassung zwischen Profilschiene und Gehäuseteilen bzw. zwischen klauenförmigen Abschnitten und den Nuten der Gehäuseteile erzielt. Es ist eine Materialüberschneidung zwischen Profilschiene und den beiden Gehäuseteilen mittels der Rippen bzw. Übermaßelemente gewährleistet. Die Übermaßpassung sorgt dafür, dass toleranzbedingte Maßabweichungen kompensiert werden und dennoch eine sichere Verbindung zwischen den Gehäuseteilen gewährleistet wird. Die Kontaktflächen der Gehäuseteile stoßen stets aufeinander und es ist eine definierte Komprimierung der Dichtung gewährleistet.

Nach einer weiteren Ausführungsform kann zumindest eine vom Gehäuseinnenraum abgewandte, erste Außenseite des ersten Gehäuseteils, vorzugsweise auch eine vom Gehäuseinnenraum abgewandte, zweite Außenseite des zweiten Gehäuseteils, im miteinander verbundenen Zustand des ersten Gehäuseteils mit dem zweiten Gehäuseteil mit einer vom Gehäuseinnenraum abgewandten, Profilschienenaußenseite bündig abschließend ausgebildet sein. Die Profilschiene kann dadurch oberflächenbündig in das Gehäuse eingebettet sein. Dies lässt die gesamte Optik homogener wirken und ein Verkanten oder Verletzen an aus der Gehäuseoberfläche hervorragenden Teilen kann auf diese Weise verhindert werden. Es kann ein oberflächenbündiges Design des Gehäuses, ohne von den Gehäuseau-ßenflächen abstehende Elemente oder Kanten erzielt werden.

Zusätzlich oder alternativ können der zumindest eine erste Gehäuseteil und der zumindest eine zweite Gehäuseteil im miteinander verbundenen Zustand den Gehäuseinnenraum derart umschließen, dass sie zumindest vier, vorzugsweise im Wesentlichen senkrecht aufeinander stehende, Gehäuseseitenwände ausbilden, wobei zumindest an einer, insbesondere an dreien, vorzugsweise an vieren, der vier Gehäuseseitenwände als Verbindungselement jeweils zumindest eine Profilschiene vorgesehen ist. Somit wird ein sehr einfach handzuhabendes Design eines Gehäuses erzielt, da die Gehäuseteile in einem ersten Schritt zusammengebracht und in einem zweiten Schritt durch das Einsetzen bzw. Einschieben der Profilschienen an wenigstens einer Seite des Gehäuses miteinander verbunden werden können. Bei einer Ausführungsform mit zumindest einer Gehäusewand, die nicht mit einer Profilschiene versehen ist, kann an dieser Gehäuseseitenwand beispielsweise ein Scharniergelenk vorgesehen sein. Dann können die Gehäuseteile durch das Scharniergelenk bereits beweglich miteinander verbunden sein, sodass nach einem Schließen des Scharniergelenks die Gehäuseteile bestimmungsgemäß aufeinander gebracht werden können. In einem nächsten Schritt können die Gehäuseteile dann dadurch bestimmungsgemäß miteinander verbunden werden, dass an wenigstens einer der anderen Gehäuseseitenwände, wenigstens eine Profilschiene als Verbindungselement eingesetzt wird.

Nach einer weiteren Ausführungsform kann der zumindest eine erste Gehäuseteil und der zumindest eine zweite Gehäuseteil im miteinander verbundenen Zustand den Gehäuseinnenraum derart umschließen, dass sie zumindest vier, vorzugsweise im Wesentlichen senkrecht aufeinander stehende, Gehäuseseitenwände ausbilden, und dass zumindest an einer Gehäuseseitenwand als Verbindungselement zumindest zwei Profilschienen vorgesehen sind. Diese Profilschienen können beispielsweise von zwei entgegengesetzten Montagerichtungen in ihren vorgesehenen Aufnahmeraum eingeschoben werden. Es können dadurch auch die Herstellungskosten von Gehäusen in verschiedenen Größen reduziert werden, da einheitliche Profilschienen in einheitlichen Größen bzw. Längen bereitgestellt werden, um Gehäuse verschiedener Größen, umfassend verschieden große Gehäuseteile bzw. verschieden große Gehäuseinnenräume, zu verschließen bzw. herzustellen.

Unter im Wesentlichen senkrecht aufeinander stehenden Gehäuseseitenwänden ist vorliegend gemeint, dass die durch die jeweilige Gehäuseseitenwand gebildete Ebene senkrecht zu der durch die benachbarte Gehäuseseitenwand gebildete Ebene verläuft. Die resultierenden Ecken des Gehäuses, die durch zwei benachbarten Gehäuseseitenwände entstehen, können dabei abgerundet ausgebildet sein, sodass keine scharfe, rechtwinklige Kante zwischen zwei benachbarten, im Wesentlichen senkrecht aufeinander stehenden Gehäuseseitenwänden ausgebildet sein muss.

Nach einer weiteren Ausführungsform kann das Gehäuse derart eingerichtet sein, dass die Profilschiene eine durch zwei benachbart angeordnete Gehäuseseitenwände gebildete Ecke des Gehäuses übergreifend angeordnet ist.

Nach einer weiteren Ausführungsform des Gehäuses kann an der dem Gehäuseinnenraum abgewandten Außenseite der Profilschiene zumindest ein Anbindungselement zum formschlüssigen Verbinden des Gehäuses mit einer Haltevorrichtung vorgesehen sein. Bei der externen Haltevorrichtung kann es sich beispielsweise um das Elektrofahrrad handeln, an welches somit das Gehäuse und die beispielsweise darin angeordnete Batterie auf einfache Weisung formschlüssig angebunden werden kann. Es kann in vorteilhafter Weise eine mechanische Arretierung des Gehäuses mit der Umgebung bzw. an der externen Haltevorrichtung erzielt werden. Dabei ist es besonders vorteilhaft, dass die Anbindungselemente an der bzw. den Profilschienen vorgesehen sind. So kann auf einfach Weise Material und Platz gespart werden, da die Profilschiene nicht lediglich dem Verbinden der Gehäuseteile, sondern auch dem Anbinden des Gehäuses an die Umgebung dienen kann.

Auf zusätzlich zu montierende Anbindungselemente wie beispielsweise zusätzliche Rastmittel kann daher verzichtet werden.

Nach einer weiteren Ausführungsform des Gehäuses kann das Anbindungselement als Vorsprung, Rastnase oder Vielzahn-Rastelement ausgebildet sein. In vorteilhafter Weise kann dadurch eine schnelle formschlüssige Verbindung zwischen Gehäuse und externer Haltevorrichtung erzielt werden. Eine schnelle Montage ist möglich, darüber hinaus auch mit einfachen Handgriffen, was insbesondere beim Einsatz des Gehäuses als Batteriegehäuse und dessen Anbindung an ein Elektrofahrrad von Vorteil ist, da wenige Handgriffe und ferner kein besonderes Werkzeug notwendig sind, um das Gehäuse an der Haltevorrichtung zu montieren.

Nach einer weiteren Ausführungsform des Gehäuses kann über das Anbindungselement eine Haltevorrichtung formschlüssig mit dem Gehäuse verbunden sein.

Weitere Vorteile, Besonderheiten und zweckmäßige Weiterbildungen der Erfindung ergeben sich ergeben sich nachfolgend aus den erläuterten Ausführungsbeispielen. Dabei zeigen im Einzelnen:
- Fig. 1: ein Ausführungsbeispiel des erfindungsgemäßen Gehäuses in einer geschnittenen Seitenansicht in einem zumindest teilweise miteinander verbundenen Zustand des ersten Gehäuseteils mit dem zweiten Gehäuseteil;
- Fig. 2: ein Teil des Gehäuses nach Fig. 1 in einer perspektivischen Ansicht während des Vorgangs des Verbindens des ersten Gehäuseteils mit dem zweiten Gehäuseteil;
- Fig. 3: eine Detailansicht der Verbindungsstelle des ersten Gehäuseteils mit dem zweiten Gehäuseteil des Gehäuses nach Fig. 1 in einer Seitenansicht während des Vorgangs des Verbindens des ersten Gehäuseteils mit dem zweiten Gehäuseteil;
- Fig. 4: eine Detailansicht der Verbindungsstelle des ersten Gehäuseteils und der Profilschiene des Gehäuses nach Fig. 1 in einer Seitenansicht;
- Fig. 5: ein Teil des Gehäuses nach Fig. 1 in einer weiteren perspektivischen Ansicht;
- Fig. 6: eine Detailansicht der Verbindungsstelle des ersten Gehäuseteils mit dem zweiten Gehäuseteil des Gehäuses nach Fig. 1 in einer Seitenansicht;
- Fig. 7: ein weiteres Ausführungsbeispiel des erfindungsgemäßen Gehäuses in einer perspektivischen Ansicht;
- Fig. 8: das Gehäuse aus Fig. 7, wobei das Innenleben des Gehäuses veranschaulicht ist;
- Fig. 9: ein weiteres Ausführungsbeispiel des erfindungsgemäßen Gehäuses in einer perspektivischen Ansicht;
- Fig. 10: ein weiteres Ausführungsbeispiel eines erfindungsgemäßen Gehäuses in einer geschnittenen, perspektivischen Ansicht;
- Fig. 11: ein weiteres Ausführungsbeispiel eines erfindungsgemäßen Gehäuses in einer geschnittenen Ansicht; und
- Fig. 12: ein Detail aus Fig. 11 in der Ansicht a), sowie eine alternative Ausgestaltung in der Ansicht b).

Es wird darauf hingewiesen, dass gleiche Bezugszeichen in den verschiedenen Figuren gleiche Bauteile bezeichnen. In Bezug auf eine Figur durchgeführte Beschreibungen bezüglich eines Bauteils gelten auch für die anderen Figuren und eine wiederholende Beschreibung wird vermieden.

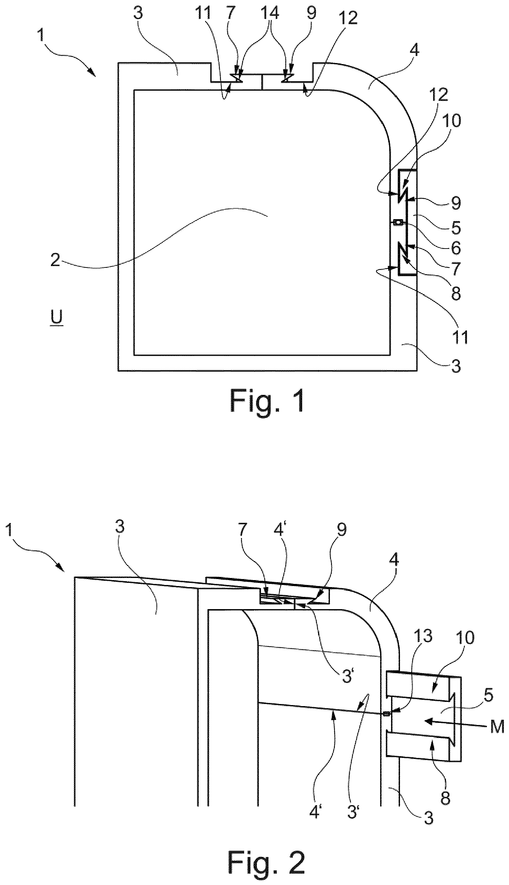

Ein Ausführungsbeispiel eines erfindungsgemäßen Gehäuses 1 ist in Fig. 1 in einer geschnittenen Seitenansicht dargestellt. Das Gehäuse 1 schützt einen Gehäuseinnenraum 2 vor einer Umgebung U. Das Gehäuse 1 ist mehrteilig aufgebaut und umfasst einen ersten Gehäuseteil 3 und einen zweiten Gehäuseteil 4. Der erste Gehäuseteil 3 und der zweite Gehäuseteil 4 werden im Allgemeinen durch Verbindungselemente zusammengebaut, vorliegend sind der erste Gehäuseteil 3 und der zweite Gehäuseteil 4 durch eine Profilschiene 5 zumindest teilweise zusammengebaut. In einem zusammengebauten Zustand, also in einem miteinander verbundenen Zustand des ersten Gehäuseteils 3 mit dem zweiten Gehäuseteil 4, trennen der erste Gehäuseteil 3 und der zweite Gehäuseteil 4 zusammen mit den Verbindungselementen den Gehäuseinnenraum 2 von der Umgebung U. Diese Trennung dient beispielsweise dazu, dass keine Nässe und kein Staub oder sonstige ungewünschte Verunreinigungen von außen, also von der Umgebung U, in den Gehäuseinnenraum 2 eindringen.

Das Gehäuse 1 kann zum Beispiel als Batteriegehäuse eingesetzt werden, unter anderem für ein Fahrrad, insbesondere für ein Elektrofahrrad, indem der Akkumulator zur Unterstützung des Antriebs des Elektrofahrrads in dem Gehäuse 1 eingesetzt und somit sicher vor äußeren Witterungseinflüssen geschützt wird. Das Gehäuse 1 kann dann mit weiteren Montagemitteln an einem Rahmen des Elektrofahrrads montiert werden. Alternativ kann ein erfindungsgemäßes Gehäuse auch allgemein als Maschinengehäuse eingesetzt werden und im Gehäuseinnenraum 2 angeordnete Bauteile vor äußeren Einflüssen schützen.

In Fig. 1 ist das Gehäuse 1 in einem zumindest teilweise miteinander verbundenen Zustand des ersten Gehäuseteils 3 mit dem zweiten Gehäuseteil 4 dargestellt. So weist das Gehäuse 1 zwei Verbindungsstellen zwischen dem ersten Gehäuseteils 3 und dem zweiten Gehäuseteil 4 auf, eine am oberen Ende des Gehäuses 1 dargestellte Verbindungsstelle, an der noch kein Verbindungselement bzw. noch keine Profilschiene 5 vorgesehen ist, sowie eine am rechten Ende des Gehäuses 1 dargestellte Verbindungsstelle, an der bereits ein Verbindungselement in Form der Profilschiene 5 vorgesehen ist.

An der Verbindungsstelle zwischen dem ersten Gehäuseteil 3 und dem zweiten Gehäuseteil 4 stoßen die beiden Gehäuseteile 3 und 4 aneinander an und bilden eine Stoßfläche bzw. Kontaktfläche aus. Wie aus Fig. 1 in Verbindung mit Fig. 2 ersichtlich wird, sind der erste Gehäuseteil 3 und der zweite Gehäuseteil 4 derart eingerichtet sind, dass sie im miteinander verbundenen Zustand aufeinanderstoßen und dabei der erste Gehäuseteil 3 eine erste Kontaktfläche 3' bzw. der zweite Gehäuseteil 4 eine zweite Kontaktfläche 4' ausbilden.

In der rechten Verbindungsstelle des Gehäuses 1 ist ferner eine Dichtung 6 vorgesehen, die den Gehäuseinnenraum 2 sicherer vor äußeren Einflüssen schützt. Die Dichtung 6 ist zwischen dem ersten Gehäuseteil 3 und dem zweiten Gehäuseteil 4 auf der dem Gehäuseinnenraum 2 zugewandten Seite der Profilschiene 5 gelegen angeordnet.

Zur sicheren Verbindung des ersten Gehäuseteils 3 mit dem zweiten Gehäuseteil 4 ist die Profilschiene 5 vorgesehen, die mit dem ersten Gehäuseteil 3 und mit dem zweiten Gehäuseteil 4 in Eingriff steht. Es liegt ein Formschluss zwischen dem ersten Gehäuseteil 3, dem zweiten Gehäuseteil 4 und der Profilschiene 5 vor. Dazu weist das erste Gehäuseteil 3 im Bereich der ersten Kontaktfläche 3' (Fig. 2) einen ersten Hakenabschnitt 7 auf. Ferner weist die Profilschiene 5 einen ersten klauenförmigen Abschnitt 8 auf, der den ersten Hakenabschnitt 7 im miteinander verbundenen Zustand des ersten Gehäuseteils 3 mit dem zweiten Gehäuseteil 4 hintergreift. Auch der zweite Gehäuseteil 4 weist in dem Bereich der zweiten Kontaktfläche 4' (Fig. 2) einen zweiten Hakenabschnitt 9 auf, wobei die Profilschiene 5 ferner einen zweiten klauenförmigen Abschnitt 10 aufweist, der den zweiten Hakenabschnitt 9 im miteinander verbundenen Zustand des ersten Gehäuseteils 3 mit dem zweiten Gehäuseteil 4 hintergreift.

Das Hintergreifen von dem ersten Hakenabschnitt 7 durch den ersten klauenförmigen Abschnitt 8 erfolgt dadurch, dass der erste klauenförmige Abschnitt 8 der Profilschiene 5 in eine auf der dem Gehäuseinnenraum 2 zugewandten Seite des ersten Hakenabschnitts 7 angeordnete, erste Nut 11 des ersten Gehäuseteils 3 eingreift. Dies gilt analog für das Hintergreifen von dem zweiten Hakenabschnitt 9 durch den zweiten klauenförmigen Abschnitt 10. Der erste Gehäuseteil 3, der zweite Gehäuseteil 4 und die Profilschiene 5 stehen also derart im miteinander verbundenen Zustand miteinander in Eingriff, dass der erste bzw. zweite klauenförmige Abschnitt 8 bzw. 10 der Profilschiene 5 in die erste Nut 11 bzw. in eine auf der dem Gehäuseinnenraum 2 zugewandten Seite des zweiten Hakenabschnitts 9 angeordnete, zweite Nut 12 des zweiten Gehäuseteils 4 eingreift. Die erste bzw. zweite Nut 11 bzw. 12 stellen also Ausnehmungen für die Profilschiene 5 dar. Diese Ausnehmungen erstrecken sich entlang bzw. parallel zur Außenwand des Gehäuses 1, sodass sich auch die Profilschiene 5 entlang bzw. parallel zur Außenwand des Gehäuses 1 erstreckt. Damit erstreckt sich vorliegend das Verbindungselement auch anders als bei anderen Verbindungselementen des Standes der Technik, wie etwa Schrauben oder Rastklipps, nicht von der Außenwand des Gehäuses 1 in Richtung des Gehäuseinnenraums 2. Es steht somit auch mehr Platz für das Verbindungselement zur Verfügung als im Vergleich zu solchen des Standes der Technik, bei denen nur die Dicke der Wand des Gehäuses 1 als Platz zur Verfügung steht. Es wird daher vorliegend eine sicherere Verbindung zwischen den Gehäuseteilen 3 und 4 gewährleistet, ohne dass es eines erhöhten Materialaufwandes oder eines erhöhten Gewichts des Gehäuses bedarf. Die dargestellte Verbindungsart durch Vorsehen der Profilschiene 5 als Verbindungselement kann jedoch auch durch die Verwendung von üblichen Fügetechniken oder Verbindungsmitteln, wie Verschraubungen oder Verrastungen, ergänzt werden.

Aus Fig. 2 ist anhand der rechts dargestellten Verbindungsstelle ersichtlich, dass an der Stoßstelle zwischen dem ersten Gehäuseteil 3 und dem zweiten Gehäuseteil 4 extra ein durch Ausnehmungen in der ersten sowie zweiten Kontaktfläche 3' und 4' gebildeter Hohlraum 13 vorgesehen ist. Dieser Hohlraum 13 dient der Aufnahme der Dichtung 6.

Wie ferner anhand der Darstellung während des Vorgangs des Verbindens des ersten Gehäuseteils 3 mit dem zweiten Gehäuseteil 4 in Fig. 2 zu erkennen ist, kann die Profilschiene 5 zur Montage einfach in die vorgesehenen Ausnehmungen des ersten und zweiten Gehäuseteils 3 und 4 eingeschoben werde, ohne dass beispielsweise Werkzeuge eingesetzt werden müssten. Das Einschieben der Profilschiene 5 erfolgt in eine Richtung, die sich parallel bzw. entlang der Nuten 11 bzw. 12 erstreckt, also auch entlang bzw. parallel zur Außenwand des Gehäuses 1. Diese Schieberichtung bzw. allgemein die Montagerichtung M ist also nicht mehr wie bei Schrauben oder Rastklipps des Standes der Technik senkrecht zur Außenwand des Gehäuses 1. Außerdem kann die Montage der Profilschiene 5 händisch und ohne Einsatz besonderer Werkzeuge erfolgen.

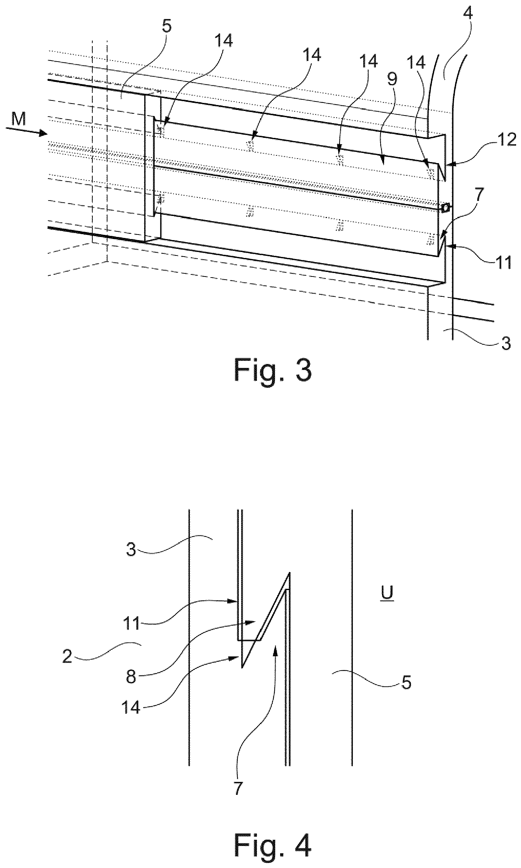

Wie in Fig. 1 an der oberen Verbindungsstelle sowie in Fig. 3 und Fig. 4 im Detail zu erkennen ist, sind in der ersten Nut 11 und in der zweiten Nut 12 ferner Rippen 14 vorgesehen. Die Rippen 14 stellen von dem Grund der ersten bzw. zweiten Nut 11 bzw. 12 hervorstehende Übermaßelemente dar. Alternativ bzw. ergänzend können diese Übermaßelemente auch anstatt in Form von Rippen 14 in Form von Noppen ausgebildet sein oder in Form von anderen sich vom Grund der Nuten 11 bzw. 12 aus erstreckenden Geometrien ausgebildet sein. Die Rippen 14 bzw. die Übermaßelemente sorgen auf diese Weise für eine Verkleinerung des durch die erste bzw. zweite Nut 11 bzw. 12 bereitgestellten Aufnahmeraum für den ersten bzw. zweiten klauenförmigen Abschnitt 8 bzw. 10 der Profilschiene 5. Der Aufnahmeraum wird dadurch verkleinert, dass die Rippen 14 bzw. Übermaßelemente überschüssiges Material in den Nuten 11 bzw. 12 bereitstellen. Dadurch wird eine Übermaßpassung zwischen dem ersten bzw. zweiten klauenförmigen Abschnitt 8 bzw. 10 der Profilschiene 5 und der ersten bzw. zweiten Nut 11 bzw. 12 des ersten bzw. zweiten Gehäuseteils 3 bzw. 4 erzielt.

Die durch die Rippen 14 entstehende Übermaßpassung ist in Fig. 3 und Fig. 4 im Detail dargestellt. Die Übermaßpassung zwischen der Profilschiene 5 und den beiden Gehäuseteilen 3 und 4 sorgt dafür, dass toleranzbedingte Maßabweichungen kompensiert werden und dennoch eine sichere Verbindung zwischen den Gehäuseteilen 3 und 4 gewährleistet wird. Es ist eine Materialüberschneidung zwischen der Profilschiene 5 und den beiden Gehäuseteilen 3 und 4 mittels der Rippen 14 gewährleistet. Dabei werden die Rippen 14 von der Profilschiene 5 bzw. von dem ersten bzw. zweiten klauenförmigen Abschnitt 8 bzw. 10 der Profilschiene 5 durch den Montageprozess eingeschnitten. Auf diese Weise stoßen die Kontaktflächen 3' und 4' im miteinander verbundenen Zustand des ersten Gehäuseteils 3 mit dem zweiten Gehäuseteil 4 stets aufeinander. Aus dem Formschluss zwischen der Profilschiene 5 und den beiden Gehäuseteilen 3 und 4 entsteht dadurch gleichzeitig ein Kraftschluss zwischen dem ersten Gehäuseteil 3 und dem zweiten Gehäuseteil 4, da die beiden Gehäuseteile 3 und 4 an ihren Kontaktflächen 3' und 4' zusammengedrückt bzw. zusammengepresst werden. Dadurch ist auch eine definierte Komprimierung der Dichtung 6 gewährleistet.

Ferner können in den Nuten 11, 12 bzw. allgemein in dem für die Profilschiene 5 vorgesehenen Aufnahmeraum auch diverse Blockadeelemente vorgesehen sein. Dadurch kann beispielsweise ein nicht zerstörungsfreies Lösen der Verbindung der Gehäuseteile 3, 4 bzw. ein nicht zerstörungsfreies Öffnen des Gehäuses 1 gewährleistet werden. So kann der Aufnahmeraum für die Profilschiene 5, nachdem die Profilschiene 5 entlang der Montagerichtung M vollständig in ihre bestimmungsgemäße Position gebracht und das Gehäuse somit erfolgreich verschlossen ist, versiegelt oder verklebt werden. Die Profilschiene 5 kann sodann nicht mehr entgegen der Montagerichtung M herausgezogen werden. Alternativ könnten bereits Blockadeelemente in dem Aufnahmeraum, etwa in den Nuten 11, 12, vorgesehen sein, wobei die Profilschiene 5 diese Blockadeelemente beim Einschieben entlang der Montagrichtung M zwar überwinden kann, jedoch die Profilschiene 5 danach nicht mehr entgegen der Montagerichtung M von ihrer bestimmungsgemäßen, das Gehäuse 1 verschließenden Position zurückgeschoben werden kann.

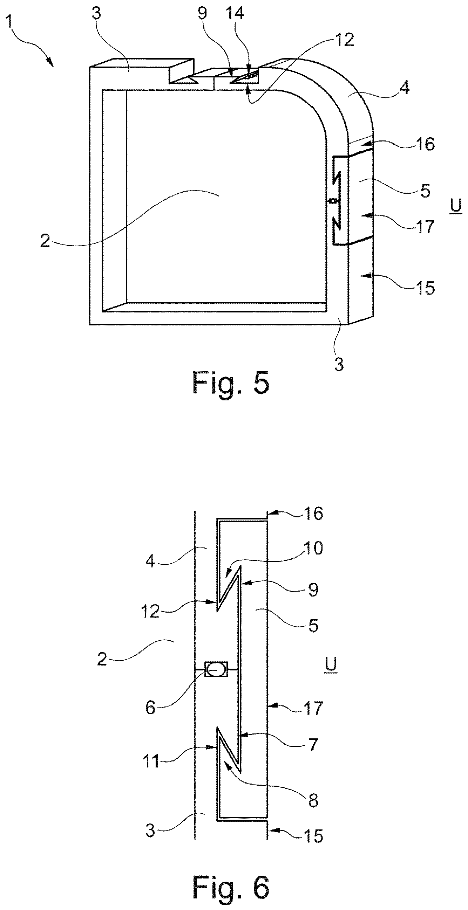

Wie aus Fig. 5 bzw. Fig. 6 ersichtlich ist, ist eine vom Gehäuseinnenraum 2 abgewandte, erste Außenseite 15 des ersten Gehäuseteils 3 im miteinander verbundenen Zustand des ersten Gehäuseteils 3 mit dem zweiten Gehäuseteil 4 mit einer vom Gehäuseinnenraum 2 abgewandten, Profilschienenaußenseite 17 bündig abschließend ausgebildet. Ferner ist auch eine vom Gehäuseinnenraum 2 abgewandte, zweite Außenseite 16 des zweiten Gehäuseteils 4 mit der Profilschienenaußenseite 17 bündig abschließend ausgebildet. Die Profilschiene 5 ist dadurch oberflächenbündig in das Gehäuse 1 eingebettet. Dies lässt die gesamte Optik homogener wirken und ein Verkanten oder Verletzen an aus der Gehäuseoberfläche hervorragenden Teilen kann auf diese Weise verhindert werden. Es kann ein oberflächenbündiges Design des Gehäuses, ohne von den Gehäuseau-ßenflächen abstehende Elemente oder Kanten erzielt werden.

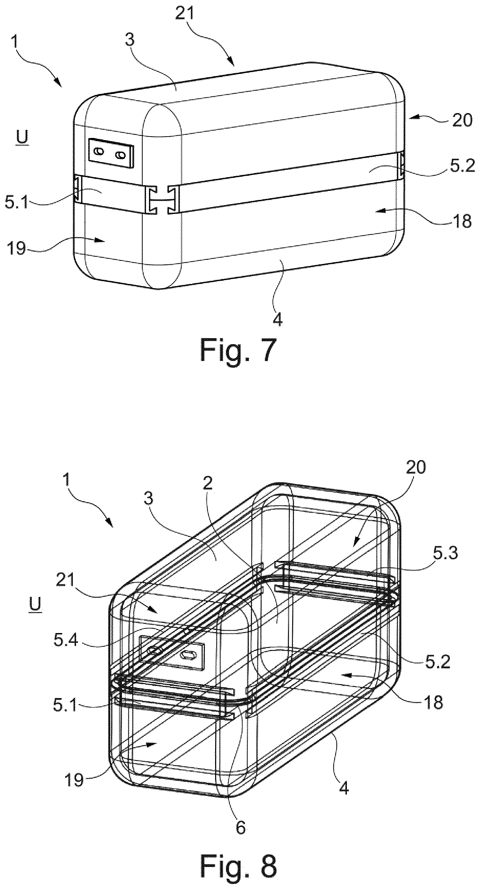

In Fig. 7 ist eine weitere Ausführungsform des Gehäuses 1 in einer perspektivischen Ansicht dargestellt. Dabei ist das Gehäuse 1 im verbundenen Zustand von außen zu erkennen. Fig. 8 zeigt das Gehäuse 1 aus Fig. 7, wobei das Innenleben des Gehäuses 1 veranschaulicht ist. Wie aus einer Zusammenschau der Fig. 7 und Fig. 8 deutlich wird, umschließen der erste Gehäuseteil 3 und der zweite Gehäuseteil 4 im dargestellten, miteinander verbundenen Zustand den Gehäuseinnenraum 2 derart, dass vier, im Wesentlichen senkrecht aufeinander stehende Gehäuseseitenwände 18, 19, 20, 21 ausgebildet sind.

Dabei ist an allen vier Gehäuseseitenwände 18, 19, 20, 21 als Verbindungselement jeweils eine Profilschiene 5.1, 5.2, 5.3, 5.4 vorgesehen. Somit wird ein sehr einfach handzuhabendes Design eines Gehäuses erzielt, da die Gehäuseteile 3, 4 in einem ersten Schritt zusammengebracht und in einem zweiten Schritt durch das Einsetzen bzw. Einschieben der Profilschienen 5.1, 5.2, 5.3, 5.4 miteinander verbunden werden können.

Alternativ kann bei einer Ausführungsform mit zumindest einer Gehäusewand, die nicht mit einer Profilschiene versehen ist, an dieser Gehäuseseitenwand beispielsweise ein Scharniergelenk vorgesehen sein. Dann können die Gehäuseteile durch das Scharniergelenk bereits beweglich miteinander verbunden sein, sodass nach einem Schließen des Scharniergelenks die Gehäuseteile bestimmungsgemäß aufeinander gebracht werden können. In einem nächsten Schritt können die Gehäuseteile dann dadurch bestimmungsgemäß miteinander verbunden werden, dass an wenigstens einer der anderen Gehäuseseitenwände, wenigstens eine Profilschiene als Verbindungselement eingesetzt wird.

In Fig. 8 ist ferner die den Gehäuseinnenraum 2 vollständig umlaufende Dichtung 6 zu erkennen. Alternativ könnte die Dichtung 6 auch in Teilabschnitten vorgesehen sein und beispielsweise mehrere gerade Einzelstücke einer Dichtung vorgesehen sein.

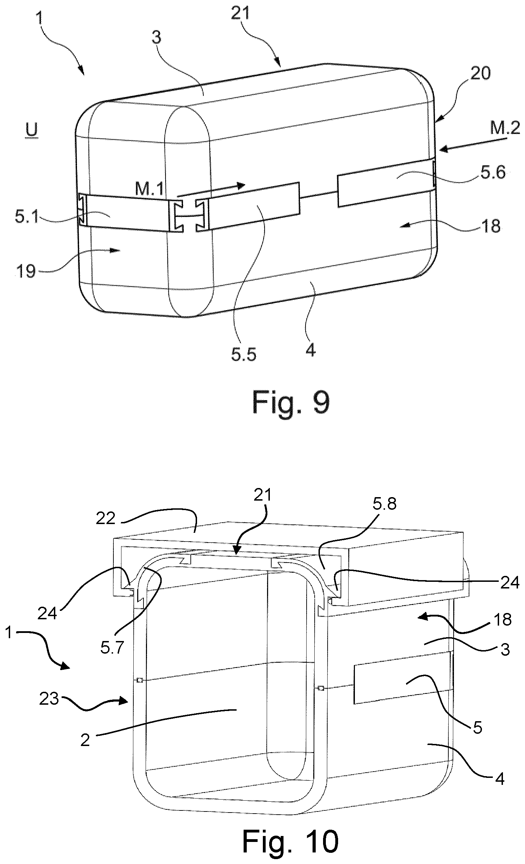

In Fig. 9 ist eine weitere Ausführungsform des Gehäuses 1 in einer perspektivischen Ansicht dargestellt. Dabei ist das Gehäuse 1 im verbundenen Zustand von außen zu erkennen. Das Gehäuse 1 unterscheidet sich von dem in Fig. 7 gezeigten Gehäuse 1 lediglich dadurch, dass an der Gehäuseseitenwand 18 zwei Profilschienen 5.5 und 5.6 anstatt lediglich einer vorgesehen sind. Diese Profilschienen 5.5, 5.6 können beispielsweise von zwei entgegengesetzten Montagerichtungen M.1 und M.2 in ihren vorgesehenen Aufnahmeraum eingeschoben werden. Es können dadurch auch die Herstellungskosten von Gehäusen in verschiedenen Größen reduziert werden, da einheitliche Profilschienen in einheitlichen Größen bzw. Längen bereitgestellt werden, um Gehäuse verschiedener Größen, umfassend verschieden große Gehäuseteile bzw. einen verschieden großen Gehäuseinnenraum, zu verschließen bzw. herzustellen.

In Fig. 10 ist ein weiteres Ausführungsbeispiel eines Gehäuses 1 in einer geschnittenen, perspektivischen Ansicht dargestellt. Dabei sind erneut die Gehäuseteile 3, 4 über die Profilschiene 5 miteinander verbunden, sodass ein Gehäuseinnenraum 2 von der Umgebung abgeschirmt ist.

Ferner ist in Fig. 10 eine externe Haltevorrichtung 22 zu erkennen. Bei der externen Haltevorrichtung 22 kann es sich beispielsweise um das Elektrofahrrad handeln, an welches das Gehäuse 1 und die beispielsweise darin angeordnete Batterie auf einfache Weisung formschlüssig angebunden werden kann.

Das Gehäuse 1 weist neben der dargestellten Profilschiene 5 auch noch zwei weitere Profilschienen 5.7 und 5.8 auf. Diese Profilschienen 5.7, 5.8. könnten ebenfalls analog zu den zuvor beschriebenen Profilschienen dazu dienen, die Gehäuseteile des Gehäuses 1 miteinander zu verbinden.

Im vorliegend dargestellten Ausführungsbeispiel ist die Profilschiene 5.7 die durch die zwei benachbart angeordneten Gehäuseseitenwände 21 und 23 gebildete Ecke des Gehäuses 1 übergreifend angeordnet. Die Profilschiene 5.8 wiederum ist die durch die zwei benachbart angeordneten Gehäuseseitenwände 18 und 21 gebildete Ecke des Gehäuses 1 übergreifend angeordnet. Dadurch können in vorteilhafter Weise über die Profilschienen 5.7 bzw. 5.8 scharfkantige Ecken des Gehäuses 1 vermieden werden. Insbesondere können die in den Ecken vorgesehenen Profilschienen 5.7 bzw. 5.8 aus einem verstärkten Material gebildet sein, um das Gehäuse 1 an den stärker beanspruchten Ecken auf besondere Weise zu schützen.

Auch können durch die in den Ecken des Gehäuses vorgesehenen Profilschienen 5.7 und 5.8 die resultierenden Ecken des Gehäuses 1 abgerundet ausgebildet sein, sodass jeweils keine scharfe, rechtwinklige Kante zwischen den benachbarten, im Wesentlichen senkrecht aufeinander stehenden Gehäuseseitenwänden 18 und 21 bzw. 21 und 23 ausgebildet ist.

Wie weiterhin aus Fig. 10 ersichtlich, ist an den dem Gehäuseinnenraum 2 abgewandten Außenseiten der Profilschienen 5.7 bzw. 5.8 jeweils ein Anbindungselement in Form einer Rastnase 24 zum formschlüssigen Verbinden des Gehäuses 1 mit der Haltevorrichtung 22 vorgesehen.

Eine solche Rastnase 24 bzw. ein alternatives Anbindungselement könnte auch an der weiteren Profilschiene 5 bzw. ebenso in den zuvor dargestellten und beschriebenen Ausführungsbeispielen an einer der anderen Profilschienen angebracht sein.

Über die Rastnasen 24 bzw. die Anbindungselemente im Allgemeinen kann in vorteilhafter Weise eine mechanische Arretierung des Gehäuses 1 mit der Umgebung bzw. im vorliegend dargestellten Ausführungsbeispiel konkret mit der externen Haltevorrichtung 22 erzielt werden. Dabei ist es besonders vorteilhaft, dass die Anbindungselemente an den 5.7 und 5.8 Profilschienen vorgesehen sind. So kann auf zusätzlich zu montierende Anbindungselemente wie beispielsweise zusätzliche Rastmittel verzichtet werden.

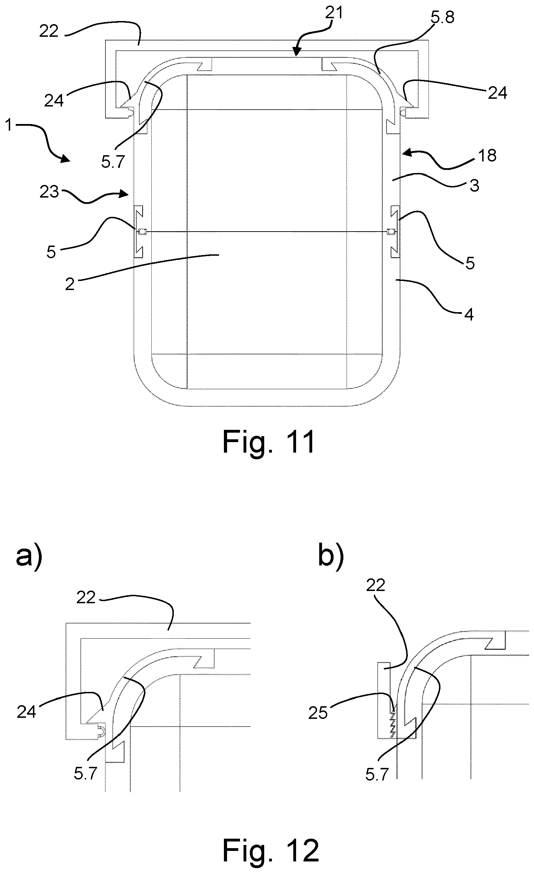

In Fig. 11 ist ein weiteres Ausführungsbeispiel des Gehäuses 1 gezeigt, das sich lediglich darin von dem zuvor im Rahmen von Fig. 10 beschriebenen Ausführungsbeispiel unterscheidet, dass eine zweite, links dargestellte Profilschiene 5 zum Verbinden der beiden Gehäuseteile 3 und 4 vorgesehen ist. Insofern kann hisichtlich der weiteren Merkmale auf die vorhergehende Beschreibung Bezug genommen werden. Es sei nochmals darauf hingewiesen, dass die in den Ecken vorgesehenen Profilschienen 5.7 und 5.8 auch dem Verbinden von Gehäuseteilen und nicht lediglich, wie vorliegend zur Verdeutlichung dargestellt, dem Anbinden einer externen Haltevorrichtung 22 dienen können.

In Fig. 12 ist in der Ansicht a) eine Ecke des Gehäuses 1 im Detail, nämlich die Ecke links oben gemäß Fig. 11 bzw. auch Fig. 10, dargestellt. Wie anhand der Fig. 12 im Detail a) ersichtlich ist, dient die Rastnase 24 dem formschlüssigen Anbinden des Gehäuses 1 an die Haltevorrichtung 22. Bei einem Einsatz des Gehäuses 1 als Batteriegehäuse für ein Elektrofahrrad könnte einerseits diese externe Haltevorrichtung 22 ortsfest und dauerhaft an dem Elektrofahrrad montiert sein, sodass das Gehäuse 1 auf einfach handzuhabende Weise an das Elektrofahrrad durch Anklicken angebunden und auch ohne großen Aufwand wieder demontiert werden könnte. Die Haltevorrichtung 22 könnte andererseits auch durch das Elektrofahrrad selbst realisiert, z.B. einstückig mit dem Rahmen des Elektrofahrrads ausgebildet, sein.

In der Ansicht b) der Fig. 12 ist eine alternative Ausführungsform eines Anbindungselementes dargestellt. So ist alternativ zur zuvor beschriebenen Rastnase 24 ein Vielzahn-Rastelement 25 als Anbindungselement vorgesehen. In vorteilhafter Weise kann auch durch ein solches Anbindungselement eine schnelle formschlüssige Verbindung zwischen Gehäuse 1 und externer Haltevorrichtung 22 erzielt werden. Alternative Ausgestaltungen von Anbindungselementen sind Vorsprünge oder Widerhakenelemente.

### Bezugszeichenliste:

- 1: Gehäuse
- 2: Gehäuseinnenraum
- 3: erster Gehäuseteil
- 4: zweiter Gehäuseteil
- 5, 5.1, 5.2, 5.3, 5.4, 5.5, 5.6, 5.7, 5.8: Profilschiene
- 6: Dichtung
- 7: erster Hakenabschnitt (der Profilschiene)
- 8: erster klauenförmiger Abschnitt (des ersten Gehäuseteils)
- 9: zweiter Hakenabschnitt (der Profilschiene)
- 10: zweiter klauenförmiger Abschnitt (des zweiten Gehäuseteils)
- 11: erste Nut (des ersten Gehäuseteils)
- 12: zweite Nut (des zweiten Gehäuseteils)
- 13: Hohlraum
- 14: Rippe
- 15: erste Außenseite (des ersten Gehäuseteils)
- 16: zweite Außenseite (des zweiten Gehäuseteils)
- 17: Profilschienenaußenseite
- 18, 19, 20, 21, 23: Gehäuseseitenwände
- 22: Haltevorrichtung
- 24: Rastnase
- 25: Vielzahn-Rastelement

- U: Umgebung
- M, M.1, M.2: Montagerichtung

## Patentansprüche

1. Gehäuse (1), insbesondere ein Batteriegehäuse, umfassend zumindest einen ersten Gehäuseteil (3), zumindest einen zweiten Gehäuseteil (4) und zumindest ein den ersten Gehäuseteil (3) mit dem zweiten Gehäuseteil (4) verbindendes Verbindungselement, wobei der erste Gehäuseteil (3) und der zweite Gehäuseteil (4) derart eingerichtet sind, dass sie in einem miteinander verbundenen Zustand einen Gehäuseinnenraum (2) von einer auf der anderen Seite des ersten Gehäuseteils (3) und des zweiten Gehäuseteils (4) liegenden Umgebung (U) trennen, wobei das zumindest eine Verbindungselement als eine mit dem ersten Gehäuseteil (3) und mit dem zweiten Gehäuseteil (4) in Eingriff stehende Profilschiene (5, 5.1, 5.2, 5.3, 5.4, 5.5, 5.6, 5.7, 5.8) ausgebildet ist, wobei der erste Gehäuseteil (3) und der zweite Gehäuseteil (4) derart eingerichtet sind, dass sie im miteinander verbundenen Zustand aufeinanderstoßen und eine erste Kontaktfläche (3') sowie eine zweite Kontaktfläche (4') ausbilden, wobei wenigstens der erste Gehäuseteil (3) im Bereich der ersten Kontaktfläche (3') einen ersten Hakenabschnitt (7) aufweist, und wobei die Profilschiene (5) einen ersten klauenförmigen Abschnitt (8) aufweist, der den ersten Hakenabschnitt (7) im miteinander verbundenen Zustand des ersten Gehäuseteils (3) mit dem zweiten Gehäuseteil (4) hintergreift, **dadurch gekennzeichnet, dass** der erste Gehäuseteil (3), der zweite Gehäuseteil (4) und die Profilschiene (5, 5.1, 5.2, 5.3, 5.4, 5.5, 5.6, 5.7, 5.8) im miteinander verbundenen Zustand derart miteinander in Eingriff stehen, dass der erste klauenförmige Abschnitt (8) der Profilschiene (5, 5.1, 5.2, 5.3, 5.4, 5.5, 5.6, 5.7, 5.8) und eine auf der dem Gehäuseinnenraum (2) zugewandten Seite des ersten Hakenabschnitts (7) angeordnete, erste Nut (11) des ersten Gehäuseteils (3) eine Übermaßpassung ausbilden.

2. Gehäuse (1) nach Anspruch 1,
**dadurch gekennzeichnet, dass** zwischen dem ersten Gehäuseteil (3) und dem zweiten Gehäuseteil (4) auf der dem Gehäuseinnenraum (2) zugewandten Seite der Profilschiene (5, 5.1, 5.2, 5.3, 5.4, 5.5, 5.6) gelegen zumindest eine Dichtung (6) angeordnet ist.

3. Gehäuse (1) nach Anspruch 1 oder 2,
**dadurch gekennzeichnet, dass** der zweite Gehäuseteil (4) in dem Bereich der zweiten Kontaktfläche (4') einen zweiten Hakenabschnitt (9) aufweist, wobei die Profilschiene (5, 5.1, 5.2, 5.3, 5.4, 5.5, 5.6, 5.7, 5.8) einen zweiten klauenförmigen Abschnitt (10) aufweist, der den zweiten Hakenabschnitt (9) im miteinander verbundenen Zustand des ersten Gehäuseteils (3) mit dem zweiten Gehäuseteil (4) hintergreift.

4. Gehäuse (1) nach Anspruch 3,
**dadurch gekennzeichnet, dass** der erste Gehäuseteil (3), der zweite Gehäuseteil (4) und die Profilschiene (5, 5.1, 5.2, 5.3, 5.4, 5.5, 5.6, 5.7, 5.8) im miteinander verbundenen Zustand ferner derart miteinander in Eingriff stehen, dass der zweite klauenförmige Abschnitt (10) der Profilschiene (5, 5.1, 5.2, 5.3, 5.4, 5.5, 5.6, 5.7, 5.8) und eine auf der dem Gehäuseinnenraum (2) zugewandten Seite des zweiten Hakenabschnitts (9) angeordnete, zweite Nut (12) des zweiten Gehäuseteils (4) eine Übermaßpassung ausbilden.

5. Gehäuse (1) nach einem der Ansprüche 1 bis 4,
**dadurch gekennzeichnet, dass** zur Ausbildung der Übermaßpassung zwischen dem ersten klauenförmigen Abschnitt (8) und der ersten Nut (11) wenigstens ein von dem Grund der ersten Nut (11) hervorstehendes Übermaßelement, insbesondere wenigstens eine Rippe (14) oder Noppe, vorgesehen ist.

6. Gehäuse (1) nach Anspruch 4 oder 5,
**dadurch gekennzeichnet, dass** zur Ausbildung der Übermaßpassung zwischen dem zweiten klauenförmigen Abschnitt (10) und der zweiten Nut (12) wenigstens ein von dem Grund der zweiten Nut (12) hervorstehendes Übermaßelement, insbesondere wenigstens eine Rippe (14) oder Noppe, vorgesehen ist.

7. Gehäuse (1) nach einem der Ansprüche 1 bis 6,
**dadurch gekennzeichnet, dass** zumindest eine vom Gehäuseinnenraum (2) abgewandte, erste Außenseite (15) des ersten Gehäuseteils (3), vorzugsweise auch eine vom Gehäuseinnenraum (2) abgewandte, zweite Außenseite (16) des zweiten Gehäuseteils (4), im miteinander verbundenen Zustand des ersten Gehäuseteils (3) mit dem zweiten Gehäuseteil (4) mit einer vom Gehäuseinnenraum (2) abgewandten, Profilschienenaußenseite (17) bündig abschließend ausgebildet ist.

8. Gehäuse (1) nach einem der Ansprüche 1 bis 7,
**dadurch gekennzeichnet, dass** der zumindest eine erste Gehäuseteil (3) und der zumindest eine zweite Gehäuseteil (4) im miteinander verbundenen Zustand den Gehäuseinnenraum (2) derart umschließen, dass sie zumindest vier, vorzugsweise im Wesentlichen senkrecht aufeinander stehende, Gehäuseseitenwände (18, 19, 20, 21) ausbilden, und dass zumindest an einer, insbesondere an dreien, vorzugsweise an vieren, der vier Gehäuseseitenwände (18, 19, 20, 21) als Verbindungselement jeweils zumindest eine Profilschiene (5.1; 5.2; 5.3; 5.4; 5.5; 5.6) vorgesehen ist.

9. Gehäuse (1) nach einem der Ansprüche 1 bis 8,
**dadurch gekennzeichnet, dass** der zumindest eine erste Gehäuseteil (3) und der zumindest eine zweite Gehäuseteil (4) im miteinander verbundenen Zustand den Gehäuseinnenraum (2) derart umschließen, dass sie zumindest vier, vorzugsweise im Wesentlichen senkrecht aufeinander stehende, Gehäuseseitenwände (18, 19, 20, 21) ausbilden, und dass zumindest an einer Gehäuseseitenwand (18) als Verbindungselement zumindest zwei Profilschienen (5.5, 5.6) vorgesehen sind.

10. Gehäuse (1) nach einem der Ansprüche 1 bis 9,
**dadurch gekennzeichnet, dass** die Profilschiene (5.7, 5.8) eine durch zwei benachbart angeordnete Gehäuseseitenwände (18, 21; 21, 23) gebildete Ecke des Gehäuses (1) übergreifend angeordnet ist.

11. Gehäuse (1) nach einem der Ansprüche 1 bis 10,
**dadurch gekennzeichnet, dass** an der dem Gehäuseinnenraum (2) abgewandten Außenseite der Profilschiene (5.7, 5.8) zumindest ein Anbindungselement zum formschlüssigen Verbinden des Gehäuses (1) mit einer Haltevorrichtung (22) vorgesehen ist.

12. Gehäuse (1) nach Anspruch 11,
**dadurch gekennzeichnet, dass** das Anbindungselement als Vorsprung, Rastnase (24) oder Vielzahn-Rastelement (25) ausgebildet ist.

13. Gehäuse (1) nach Anspruch 11 oder 12,
**dadurch gekennzeichnet, dass** über das Anbindungselement eine Haltevorrichtung (22) formschlüssig mit dem Gehäuse verbunden ist.

## Claims

1. A housing (1), particularly a battery housing, comprising at least one first housing part (3), at least one second housing part (4), and at least one connecting member connecting the first housing part (3) to the second housing part (4), wherein the first housing part (3) and the second housing part (4) are configured such that, in an interconnected state, they separate a housing interior space (2) from an environment (U) situated on the other side of the first housing part (3) and the second housing part (4), wherein the at least one connecting member is configured as a profile rail (5, 5.1, 5.2, 5.3, 5.4, 5.5, 5.6, 5.7, 5.8) engaged with the first housing part (3) and with the second housing part (4), wherein the first housing part (3) and the second housing part (4) are configured such that they abut against each other and form a first contact surface (3') and a second contact surface (4') in the interconnected state, wherein at least the first housing part (3) has a first hook portion (7) in the region of the first contact surface (3'), and wherein the profile rail (5) has a first claw-shaped portion (8) reaching behind the first hook portion (7) in the interconnected state of the first housing part (3) and the second housing part (4), **characterized in that** the first housing part (3), the second housing part (4) and the profile rail (5, 5.1, 5.2, 5.3, 5.4, 5.5, 5.6, 5.7, 5.8), in the interconnected state, are engaged with each other in such a way that the first claw-shaped portion (8) of the profile rail (5, 5.1, 5.2, 5.3, 5.4, 5.5, 5.6, 5.7, 5.8) and a first groove (11) of the first housing part (3) disposed on the side of the first hook portion (7) facing towards the housing interior space (2) form an interference fit.

2. The housing (1) according to claim 1,
**characterized in that,** situated on the side of the profile rail (5, 5.1, 5.2, 5.3, 5.4, 5.5, 5.6) facing towards the housing interior space (2), at least one seal (6) is disposed between the first housing part (3) and the second housing part (4).

3. The housing (1) according to claim 1 or 2,
**characterized in that** the second housing part (4) has a second hook portion (9) in the region of the second contact surface (4'), wherein the profile rail (5, 5.1, 5.2, 5.3, 5.4, 5.5, 5.6, 5.7, 5.8) has a second claw-shaped portion (10) reaching behind the second hook portion (9) in the interconnected state of the first housing part (3) and the second housing part (4).

4. The housing (1) according to claim 3,
**characterized in that** the first housing part (3), the second housing part (4) and the profile rail (5, 5.1, 5.2, 5.3, 5.4, 5.5, 5.6, 5.7, 5.8), in the interconnected state, are further engaged with each other in such a way that the second claw-shaped portion (10) of the profile rail (5, 5.1, 5.2, 5.3, 5.4, 5.5, 5.6, 5.7, 5.8) and a second groove (12) of the second housing part (4) disposed on the side of the second hook portion (9) facing towards the housing interior space (2) form an interference fit.

5. The housing (1) according to any one of the claims 1 to 4,
**characterized in that** at least one interference member protruding from the bottom of the first groove (11), in particular at least one rib (14) or one stud, is provided in order to form the interference fit between the first claw-shaped portion (8) and the first groove (11) .

6. The housing (1) according to claim 4 or 5,
**characterized in that** at least one interference member protruding from the bottom of the second groove (12), in particular at least one rib (14) or one stud, is provided in order to form the interference fit between the second claw-shaped portion (10) and the second groove (12).

7. The housing (1) according to any one of the claims 1 to 6,
**characterized in that** at least one first outer side (15) of the first housing part (3) facing away from the housing interior space (2), preferably also a second outer side (16) of the second housing part (4) facing away from the housing interior space (2), is configured to be flush with an outer side (17) of the profile rail facing away from the housing interior space (2) in the interconnected state of the first housing part (3) and the second housing part (4).

8. The housing (1) according to any one of the claims 1 to 7,
**characterized in that,** in the interconnected state, the at least one first housing part (3) and the at least one second housing part (4) enclose the housing interior space (2) in such a way that they form at least four housing side walls (18, 19, 20, 21) that are preferably substantially perpendicular to one another, and that at least one profile rail (5.1; 5.2; 5.3; 5.4; 5.5; 5.6) is respectively provided as a connecting member on at least one, in particular on three, preferably on four, of the four housing side walls (18, 19, 20, 21).

9. The housing (1) according to any one of the claims 1 to 8,
**characterized in that,** in the interconnected state, the at least one first housing part (3) and the at least one second housing part (4) enclose the housing interior space (2) in such a way that they form at least four housing side walls (18, 19, 20, 21) that are preferably substantially perpendicular to one another, and that at least two profile rails (5.5, 5.6) are provided as a connecting member on at least one housing side wall (18) .

10. The housing (1) according to any one of the claims 1 to 9,
**characterized in that** the profile rail (5.7, 5.8) is arranged such that it reaches over a corner of the housing (1) formed by two housing side walls (18, 21; 21, 23) disposed adjacent to each other.

11. The housing (1) according to any one of the claims 1 to 10,
**characterized in that** at least one attachment member for positively connecting the housing (1) to a retaining device (22) is provided on the outer side of the profile rail (5.7, 5.8) facing away from the housing interior space (2).

12. The housing (1) according to claim 11,
**characterized in that** the attachment member is configured as a projection, latching lug (24) or multi-tooth latching member (25).

13. The housing (1) according to claim 11 or 12,
**characterized in that** a retaining device (22) is positively connected to the housing via the attachment member.

## Revendications

1. Compartiment (1), notamment un compartiment à batterie, comprenant au moins une première partie de compartiment (3), au moins une deuxième partie de compartiment (4) et au moins un élément d'assemblage assemblant la première partie de compartiment (3) avec la deuxième partie de compartiment (4), la première partie de compartiment (3) et la deuxième partie de compartiment (4) étant aménagées de telle sorte que lorsqu'elles sont assemblées l'une avec l'autre, elle séparent un espace intérieur (2) de compartiment d'un environnement (U) situé de l'autre côté de la première partie de compartiment (3) et de la deuxième partie de compartiment (4), l'au moins un élément d'assemblage étant conçu sous la forme d'un rail profilé (5, 5.1, 5.2, 5.3, 5.4, 5.5, 5.6, 5.7, 5.8) qui s'engage dans la première partie de compartiment (3) et dans la deuxième partie de compartiment (4), la première partie de compartiment (3) et la deuxième partie de compartiment (4) étant aménagées de telle sorte que lorsqu'elles sont assemblées l'une avec l'autre, elles s'aboutent et forment une première surface de contact (3'), ainsi qu'une deuxième surface de contact (4'), au moins la première partie de compartiment (3) comportant dans la zone de la première surface de contact (3') un premier segment de crochet (7), et le rail profilé (5) comportant un premier segment (8) en forme de griffe, qui lorsque la première partie de compartiment (3) est assemblée avec la deuxième partie de compartiment (4), s'accroche par l'arrière sur le premier segment de crochet (7), **caractérisé en ce que**, lorsqu'ils sont assemblés les uns avec les autres, la première partie de compartiment (3), la deuxième partie de compartiment (4) et le rail profilé (5, 5.1, 5.2, 5.3, 5.4, 5.5, 5.6, 5.7, 5.8) sont en engagement mutuel de telle sorte que le premier segment (8) en forme de griffe du rail profilé (5, 5.1, 5.2, 5.3, 5.4, 5.5, 5.6, 5.7, 5.8) et qu'une première rainure (11) de la première partie de compartiment (3) placée sur le premier côté du premier segment de crochet (7) qui fait face à l'espace intérieur (2) de compartiment forment un ajustement surdimensionné.

2. Compartiment (1) selon la revendication 1,
**caractérisé en ce qu'**entre la première partie de compartiment (3) et la deuxième partie de compartiment (4) est placé un joint (6), posé sur le côté du rail profilé (5, 5.1, 5.2, 5.3, 5.4, 5.5, 5.6) qui fait face à l'espace intérieur (2) de compartiment.

3. Compartiment (1) selon la revendication 1 ou 2,
**caractérisé en ce que** la deuxième partie de compartiment (4) comporte dans la zone de la deuxième surface de contact (4') un deuxième segment de crochet (9), le rail profilé (5, 5.1, 5.2, 5.3, 5.4, 5.5, 5.6, 5.7, 5.8) comportant un deuxième segment (10) en forme de griffe, qui lorsque la première partie de compartiment (3) est assemblée avec la deuxième partie de compartiment (4), s'accroche par l'arrière sur le deuxième segment de crochet (9).

4. Compartiment (1) selon la revendication 3,
**caractérisé en ce que**, lorsqu'ils sont assemblés les uns avec les autres, la première partie de compartiment (3), la deuxième partie de compartiment (4) et le rail profilé (5, 5.1, 5.2, 5.3, 5.4, 5.5, 5.6, 5.7, 5.8) sont par ailleurs en engagement mutuel de telle sorte, que le deuxième segment (10) en forme de griffe du rail profilé (5, 5.1, 5.2, 5.3, 5.4, 5.5, 5.6, 5.7, 5.8) et une deuxième rainure (12) de la deuxième partie de compartiment (4), placée sur le côté du deuxième segment de crochets (9) qui fait face à l'espace intérieur (2) de compartiment forment un ajustement surdimensionné.

5. Compartiment (1) selon l'une quelconque des revendications 1 à 4,
**caractérisé en ce que** pour former l'ajustement surdimensionné entre le premier segment (8) en forme de griffe et la première rainure (11), il est prévu au moins un élément surdimensionné, notamment au moins une nervure (14) ou un téton qui saillit à partir du fond de la première rainure (11).

6. Compartiment (1) selon la revendication 4 ou 5,
**caractérisé en ce que** pour former l'ajustement surdimensionné entre le deuxième segment (10) en forme de griffe et la deuxième rainure (12), il est prévu au moins un élément surdimensionné, notamment au moins une nervure (14) ou un téton qui saillit à partir du fond de la deuxième rainure (12).

7. Compartiment (1) selon l'une quelconque des revendications 1 à 6,
**caractérisé en ce que** lorsque la première partie de compartiment (3) est assemblée avec la deuxième partie de compartiment (4), au moins un premier côté extérieur (15) de la première partie de compartiment (3) opposé à l'espace intérieur (2) de compartiment, de préférence également un deuxième côté extérieur (16) de la deuxième partie de compartiment (4) opposé à l'espace intérieur (2) de compartiment est conçu pour se terminer à fleur d'un côté extérieur (17) de rail profilé opposé à l'espace intérieur (2) de compartiment.

8. Compartiment (1) selon l'une quelconque des revendications 1 à 7,
**caractérisé en ce que**, lorsqu'elles sont assemblées l'une avec l'autre, l'au moins une première partie de compartiment (3) et l'au moins une deuxième partie de compartiment (4) entourent l'espace intérieur (2) de compartiment de sorte à former au moins quatre parois latérales (18, 19, 20, 21) de compartiment, de préférence debout l'une sur l'autre sensiblement à la perpendiculaire et **en ce qu'**il est prévu en tant qu'élément d'assemblage sur au moins l'une, notamment sur trois, de préférence sur quatre des parois latérales (18, 19, 20, 21) de compartiment chaque fois au moins un rail profilé (5.1 ; 5.2 ; 5.3 ; 5.4 ; 5.5 ; 5.6).

9. Compartiment (1) selon l'une quelconque des revendications 1 à 8,
**caractérisé en ce que**, lorsqu'elles sont assemblées l'une avec l'autre, l'au moins une première partie de compartiment (3) et l'au moins une deuxième partie de compartiment (4) entourent l'espace intérieur (2) de compartiment de sorte à former au moins quatre parois latérales (18, 19, 20, 21) de compartiment, de préférence debout l'une sur l'autre sensiblement à la perpendiculaire, et **en ce que** sont prévus en tant qu'éléments d'assemblage sur au moins une paroi latérale (18) de compartiment au moins deux rails profilés (5.5, 5.6).

10. Compartiment (1) selon l'une quelconque des revendications 1 à 9,
**caractérisé en ce que** le rail profilé (5.7, 5.8) est placé de sorte à chevaucher un coin du compartiment (1) formé par deux parois latérales (18, 21 ; 21, 23) de compartiment voisines.

11. Compartiment (1) selon l'une quelconque des revendications 1 à 10,
**caractérisé en ce que** sur le côté extérieur du rail profilé (5. 7, 5.8) opposé à l'espace intérieur (2) de compartiment est prévu un élément de raccordement, destiné à assembler par complémentarité de forme le compartiment (1) avec un dispositif de retenue (22).

12. Compartiment (1) selon la revendication 11,
**caractérisé en ce que** l'élément de raccordement est conçu sous la forme d'une saillie, d'un bec d'enclenchement (24) ou d'un élément d'enclenchement (25) à dents multiples.

13. Compartiment (1) selon la revendication 11 ou 12,
**caractérisé en ce que** par l'intermédiaire de l'élément de raccordement, un dispositif de retenue (22) est assemblé par complémentarité de forme avec le compartiment.
